# EUROPÄISCHE PATENTSCHRIFT

(11) **EP 1 027 277 B1**
(45) Veröffentlichungstag und Bekanntmachung des Hinweises auf die Patenterteilung: **29.08.2001**
(21) Anmeldenummer: 98954466.3
(22) Anmeldetag: 30.10.1998
(51) Int. Cl.: B67D 1/00, E03B 9/20, B67D 1/04

(54) **MOBILER FLÜSSIGKEITSSPENDER**
MOBILE LIQUID DISPENSER
DISTRIBUTEUR DE LIQUIDE MOBILE

(30) Priorität: 30.10.1997 DE 29719205 U
(43) Veröffentlichungstag der Anmeldung: 16.08.2000
(73) Patentinhaber: Schneider, Joachim, 66701 Beckingen (DE); Schneider, Adolf, 66701 Beckingen (DE); Adam, Gabi, 66701 Beckingen (DE)
(72) Erfinder: Schneider, Joachim, 66701 Beckingen (DE); Schneider, Adolf, 66701 Beckingen (DE); Adam, Gabi, 66701 Beckingen (DE)
(74) Vertreter: Patentanwälte Möll und Bitterich
(86) Internationale Anmeldenummer: EP9806878
(87) Internationale Veröffentlichungsnummer: WO9923027

(56) Entgegenhaltungen:
- DE-U- 29 620 776
- US-A- 3 142 443
- US-A- 4 081 134
- US-A- 5 094 388

## Beschreibung

### Technisches Gebiet:

Die Erfindung betrifft ohne Hilfsenergie und/oder Hilfsvorrichtung arbeitende, mobile Flüssigkeitsspender gemäß dem Oberbegriff des Anspruchs 1.

### Stand der Technik:

Anlagen zur Versorgung von Entnahmestellen insbesondere mit Wasser sind vielfältig bekannt. In ihrer einfachsten Form besteht eine solche Anlage aus einem Speicherbehälter, der höher als die Entnahmestellen aufgestellt wird. Durch den hydrostatischen Druck werden die Entnahmestellen mit Druckwasser beaufschlagt. Nachteilig dabei ist, daß der Speicherbehälter zur Druckerzeugung höher stehen muß als die Verbrauchsstellen, was nicht immer möglich ist

Eine andere Möglichkeit der Wasserversorgung ist aus der DE-A 40 29 848 bekannt. Diese Druckschrift offenbart einen Behälter mit veränderbarem Volumen. Zur Erzeugung des Wasserdrucks wird auf den Behälter ein Gewicht aufgelegt. Der Vorteil dieser Lösung gegenüber der zuvor beschriebenen ist, daß der Behälter auch tiefer als die Verbrauchsstellen aufgestellt werden kann. Nachteilig ist jedoch das hohe Gesamtgewicht der Anlage.

Wegen der Nachteile der oben beschriebenen Systeme ist man dazu übergegangen, Wasserversorgungssysteme in Verbindung mit elektrischen Pumpen zu betreiben. Bei jeder Wasserentnahme wird gleichzeitig die Pumpe eingeschaltet, die das Wasser unter Druck zur Entnahmestelle fördert. Solche Anlagen finden überall dort Anwendung, wo eine Stromquelle zur Verfügung steht, vor allem in Wohnwagen, Wohnmobilen und Sportbooten. Sie sind also an das Fahrzeug gebunden, in dem sie installiert sind. Ein Herausnehmen der Anlage, um sie an wechselnden Einsatzorten zu verwenden, ist nicht möglich.

Altemativ zum Pumpenbetrieb ist es aus der DE-U 296 20 776 bekannt, mit Hilfe eines unter Innendruck stehenden Flüssigkeitsbehälters Entnahmestellen mit Flüssigkeit unter Druck zu versorgen. Zur Erzeugung des Betriebsdrucks wird die Tatsache ausgenutzt, daß viele Flüssigkeiten, beispielsweise Trinkwasser, in einem Versorgungsnetz unter Druck zur Verfügung stehen. Wird der zunächst nur mit Luft gefüllte Druckbehälter aus dem Versorgungsnetz mit Wasser gefüllt, so erhöht sich der Behälterinnendruck bis auf den Druck des Versorgungsnetzes. Wird anschließend eine Entnahmestelle, beispielsweise ein Wasserhahn, geöffnet, drückt das Luftpolster die Flüssigkeit aus dem Behälter. Entsprechend dem Behälterinnendruck können auch größere Höhendifferenzen überwunden werden. Dabei ist von Vorteil, dass das komprimierte Luftpolster praktisch nichts wiegt.

### Darstellung der Erfindung:

Vor diesem Hintergrund liegt der Erfindung die Aufgabe zugrunde, einen Flüssigkeitsspender anzugeben, der in dem Sinne mobil ist, daß er von einer Person ohne große Mühe und Aufwand an verschiedene Einsatzorte gebracht werden kann, wo er sofort ohne weitere Anschluß- oder Befüllarbeiten zur Verfügung steht, der aber auch größere Flüssigkeitsmengen bevorraten kann.

Gemäß der Erfindung wird diese Aufgabe durch einen Flüssigkeitsspender mit den Merkmalen des Anspruchs 1 gelöst.

### Vorteilhafte Weiterbildungen ergeben sich aus den Unteransprüchen.

Vorteil der Erfindung ist, daß sie infolge ihrer Vielseitigkeit größtmögliche Flexibilität für ihren Benutzer ermöglicht. So handelt es sich bei dem Flüssigkeitsspender um eine multifunktionale Vorrichtung, die für die unterschiedlichsten Verwendungszwecke geeignet ist. Zum Betreiben des Flüssigkeitsspenders wird dieser lediglich kurz an ein stationäres Versorgungsnetz angeschlossen. Dabei wird der Druckbehälter gefüllt und der Betriebsdruck erzeugt. Danach läßt sich der Flüssigkeitsspender an jeden beliebigen Ort verbringen und dort ohne Hilfsenergie und/oder Hilfsvorrichtung wie z. B. Pumpe, Kompressor etc. betreiben.

Die einfachste Entnahmeeinheit ist ein Schlauch, der zu Reinigungs- oder Bewässerungszwecken dienen kann.

Es ist auch möglich, die Entnahmeeinheit als Wasserhahn mit Auffangbecken auszubilden, wodurch man ein Trink- oder Waschbecken erhält.

Gemäß einer vorteilhaften Weiterbildung ist unterhalb des Waschbeckens und mit diesem verbunden ein Abwassertank angeordnet.

Eine weitere Art der Verwendung stellt eine Tiertränke dar, bei der die Entnahmeeinheit aus einem maulbetätigten Ventil und einem muldenförmigen Trinkbecken besteht. Eine solche Ausführungsform ist beispielsweise bestens im Reitsport verwendbar, wo die Pferde an ständig wechselnden Orten mit Trinkwasser versorgt und mit Wasser abgespritzt werden müssen.

Darüber hinaus ist der Benutzer eines erfindungsgemäßen Flüssigkeitsspenders von örtlichen Gegebenheiten völlig unabhängig. Das hat seinen Grund in der Unabhängigkeit des Flüssigkeitsspenders von stationären Energie- und Wasserversorgungsnetzen in Verbindung mit der Kompaktheit des Flüssigkeitsspenders. Da der Flüssigkeitsspender alle wichtigen Elemente auf engstem Raum in sich vereint, ist es möglich, ihn ohne größere Mühe überall mit hin zu nehmen. Bei geeigneter Dimensionierung kann der Flüssigkeitsspender von einer Person getragen oder gefahren werden.

Ein weiterer Vorteil der Erfindung ist ihre Wirtschaftlichkeit. Diese ergibt sich aus dem modularen Aufbau des Flüssigkeitsspenders. So kann der Flüssigkeitsspender aus einem Basismodul bestehen, auf das in Abhängigkeit von dem gewünschten Einsatzzweck verschiedene Entnahmeeinheiten aufgesteckt werden können. Schlauch und Becken wurden bereits erwähnt. Außerdem ermöglicht der modulare Aufbau im Falle von Defekten den einfachen Austausch.

Nach einer vorteilhaften Ausführungsform sind die benachbarten Einheiten so ausgebildet, daß sie in einfacher Weise zusammengesteckt werden können.

Ein weiterer Vorteil der Erfindung zeigt sich schließlich in der einfachen und komfortablen Handhabung des Flüssigkeitsspenders. Falls sämtliche Verbindungen und Anschlüsse als Steckverbindungen und Schnellkupplungen mit integriertem Wasserstopp ausgebildet sind, läßt sich der erfindungsgemäße Flüssigkeitsspender in Sekundenschnelle von dem einen Verwendungszweck auf den anderen umrüsten. Ebenso einfach ist das Befüllen des Druckbehälters, wobei lediglich mit Hilfe eines Schlauches die Verbindung zum örtlichen Versorgungsnetz hergestellt werden muß.

Nach einer weiteren vorteilhaften Ausführungsform sind an dem Flüssigkeitsspender vorzugsweise in Höhe der Verbrauchsstelle Ablagen ansteckbar. Dadurch erhält man Flächen, die zum Lagem von Küchengeräten, Geschirr, Besteck, Seife etc., aber auch zum Anrichten von Speisen genutzt werden können.

Gemäß einer besonders bevorzugten Ausführungsform sind Druckbehälter und/oder Gehäuse wärmeisoliert. Dadurch besteht die Möglichkeit, mit dem erfindungsgemäßen System auch warmes Wasser zu bevorraten. Dies ist besonders bei einer Verwendung als Wascheinheit in der kalten Jahreszeit angenehm. Außerdem ist die Reinigungswirkung von warmem Waschwasser bekanntlich besser als die von kaltem. Versuche haben gezeigt, dass mit Hilfe einer ausreichenden Wärmeisolierung der Wasservorrat bis zu einem ganzen Tag warmgehalten werden kann.

Eine wichtige Aufgabe kommt dem Dichtelement zu. Das Dichtelement muss einerseits die Flüssigkeit ungehindert passieren lassen, andererseits verhindern, dass das Druckgaspolster entweicht. Zur Lösung dieser Aufgabe gibt es mehrere Altemativen.

Gemäß einer ersten Alternative ist das Dichtelement eine gasdichte Membran. Diese unterteilt das Innere des Druckbehälters in einen druckgasgefüllten und einen flüssigkeitsgefüllten Teil.

Eine zweite Altemative sieht vor, dass das Dichtelement ein vom Innendruck des Druckbehälters gesteuertes Ventil ist.

Eine besonders einfache Ausführungsform hierzu umfaßt ein Wellrohr, welches vome und hinten mittels Deckel verschlossen ist. Der vordere Deckel trägt einen Ventilteller, der mit einem Ventilsitz an der Steigleitung zur Verbrauchsstelle korrespondiert. Der hintere Verschlussdeckel wird in geeigneter Weise an oder im Behälter fixiert. Querschnitt und Federeigenschaften des Wellrohrs werden so dimensioniert, dass das Wellrohr sich ausdehnt und das Ventil schließt, wenn der Behälterinnendruck die untere Grenze erreicht hat. Beim Wiederbefüllen des Druckbehälters wird das Ventil durch die einströmende Flüssigkeit geöffnet. Anschließend bleibt das Ventil offen, so lange der Behälterinnendruck über dem Mindestdruck liegt. Sollte beim Befüllen des Druckbehälters Luft eingedrückt werden, beispielsweise durch einen zunächst leeren Füllschlauch, so führt dies zu einer Überhöhung der Luftmenge, die jedoch wieder entweichen kann, da das druckgesteuerte Ventil erst bei Erreichen des werksseitig eingestellten Mindestdrucks schließt.

Gemäß einer dritten Alternative ist das Dichtelement ein vom Flüssigkeitspegel gesteuertes Ventil.

Eine besonders einfache Ausführungsform hierzu besteht aus einer schwimmenden Dicntkugel, die in einem Ventilgehäuse geführt ist, das einerseits Öffnungen zu der Flüssigkeit im Druckbehälter, andererseits einen Ventilsitz zum Steigrohr besitzt.

Angesichts der Aufgabe, dass der erfindungsgemäße Flüssigkeitsspender mobil sein und von nur einer Person getragen bzw. gefahren werden soll, ist der Flüssigkeitsvorrat im Druckbehälter begrenzt, beispielsweise auf 20 l. In vielen Fällen besteht jedoch der Wunsch nach größeren Flüssigkeitsmengen. Um diesem Wunsch gerecht zu werden, ist gemäß einer vorteilhaften Weiterbildung der Erfindung wenigstens ein Zusatz-Druckbehälter vorgesehen. Der erste Druckbehälter bildet den Basis-Druckbehälter. Basis-Druckbehälter und Zusatz-Druckbehälter sind mit zusätzlichen Kupplungen mit Absperrvorrichtung, vorzugsweise Schnellkupplungen mit integriertem Wasserstopp, versehen, wobei die Kupplungen Verbindung nur zur Flüssigkeit haben, um ein Entweichen des Druckgaspolsters zu verhindern. Dank der korrespondierenden Kupplungsteile an den Druckbehältern können die Zusatz-Druckbehälter auf den Basis-Druckbehälter aufgesetzt werden.

Gemäß einer Weiterbildung sind in den Druckbehältern Verbindungsrohre vorgesehen. Im Basis-Druckbehälter verbindet das Verbindungsrohr das eine Kupplungsteil mit dem Dichtelement. In den Zusatz-Druckbehältern verbindet das Verbindungsrohr die beiden Kupplungsteile. Auch in diesen Fällen ist dafür zu sorgen, dass die Verbindungsrohre Verbindung nur zur Flüssigkeit haben, damit das Druckgaspolster nicht entweichen kann.

Vorzugsweise sind an den Druckbehältem miteinander korrespondierende Halte- und Justiervorrichtungen vorgesehen, vorzugsweise konzentrisch zur Kupplung.

Dank dieser erfindungsgemäßen Weiterbildungen können praktisch beliebig viele Druckbehälter gekoppelt werden, und zwar entweder nur Basis-Druckbehälter oder ein Basis-Druckbehälter mit beliebig vielen Zusatz-Druckbehältem, wobei es problemlos möglich ist, jeden einzelnen Druckbehälter aus dem Verbund herauszunehmen und befüllt wieder in den Verbund einzusetzen. In jedem Falle findet ein automatischer Flüssigkeits- und Druckausgleich in allen Behältern statt. Der erfindungsgemäße Flüssigkeitsspender lässt sich so quasi-kontinuierlich betreiben.

### Kurze Beschreibung der Zeichnungen:

Die Erfindung wird nachstehend anhand von in der Zeichnung dargestellten Ausführungsbeispielen erläutert. Es zeigen
- Fig. 1: eine Schrägansicht eines Flüssigkeitsspenders in Form einer Tiertränke, wobei innenliegende und normalerweise verdeckte Einbauteile sichtbar dargestellt sind,
- Fig. 2: ein Ausführungsbeispiel eines druckgesteuerten Dichtelements im geschlossenen Zustand,
- Fig. 3: das Dichtelement der Fig. 2 im geöffneten Zustand,
- Fig. 4: eine Schrägansicht eines Flüssigkeitsspenders in Form eines mobilen Waschplatzes, wobei innenliegende und normalerweise verdeckte Einbauteile sichtbar dargestellt sind,
- Fig. 5: eine rein schematische Ansicht eines Flüssigkeitsspenders in Form eines zweiten Waschplatzes, wobei außer einem Basis-Druckbehälter mehrere Zusatz-Druckbehälter vorgesehen sind,
- Fig. 6: in vergrößerter Darstellung einen Längsschnitt durch zwei Zusatz-Druckbehälter,
- Fig. 7: einen Längsschnitt durch eine selbstschließende Steckkupplung und
- Fig. 8: eine Schrägansicht eines weiteren Flüssigkeitsspenders in Form einer Tiertränke.

### Wege zur Ausführung der Erfindung und gewerbliche Verwertbarkeit:

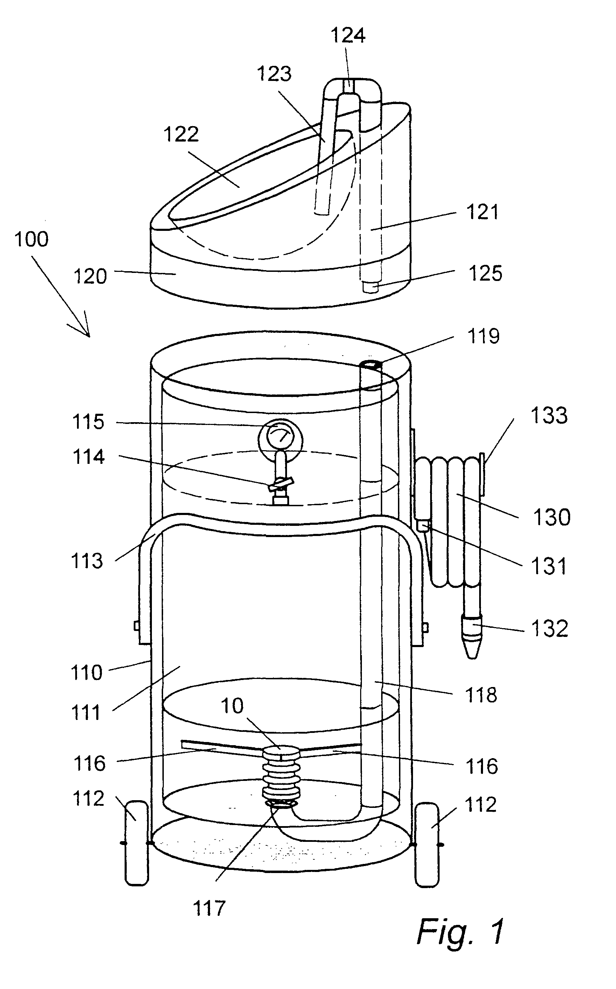

Fig. 1 zeigt einen Flüssigkeitsspender 100 zur Verwendung als Tiertränke. Er besteht im wesentlichen aus einem zylinderförmigen Gehäuse 110, in dem Druckbehälter 111 untergebracht ist. Der Druckbehälter 111 ist teilweise mit Wasser gefüllt. Der darüber liegende Raum ist mit einem unter Druck stehenden Gas, z. B. Luft, gefüllt. Das Druckpolster ist so groß, daß selbst in entleertem Zustand noch ein Innendruck von z. B. 1,5 bar vorhanden ist. Dadurch wird gewährleistet, dass auch der letzte Wassertropfen noch mit Druck entnommen werden kann.

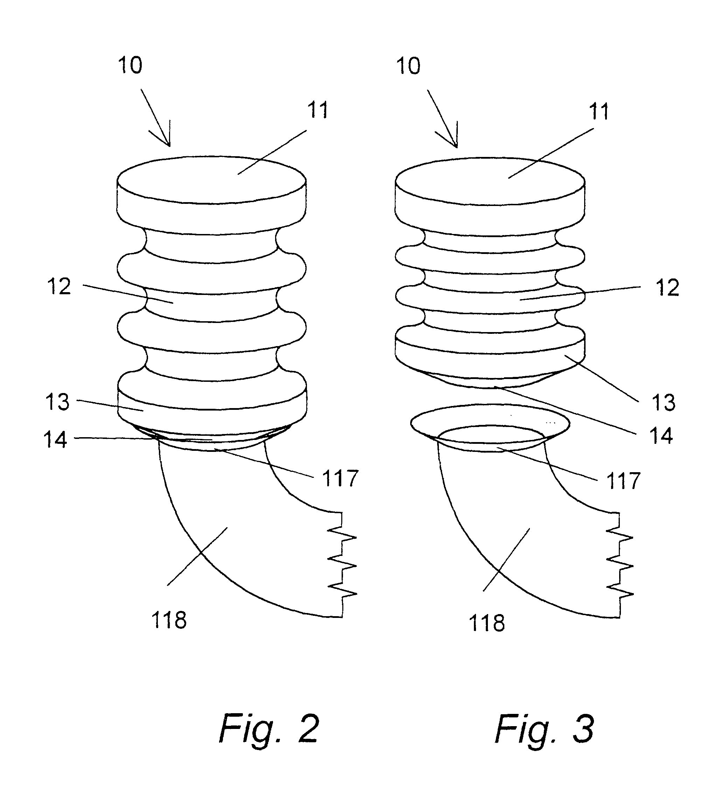

Im Boden des Speicherbehälters 111 erkennt man ein vom Behälterinnendruck gesteuertes Ventil 10 in Form eines Wellrohrs. Dieses soll anhand der Fig. 2 und 3 noch näher erläutert werden. Das Ventil 10 kooperiert mit einem Dichtsitz 117 im Boden des Druckbehälters 111, von dem eine Steigleitung 118 bis zur Oberseite des Gehäuses 110 geführt ist. Dort ist eine Schnellkupplung 119 mit integriertem Wasserstopp vorgesehen.

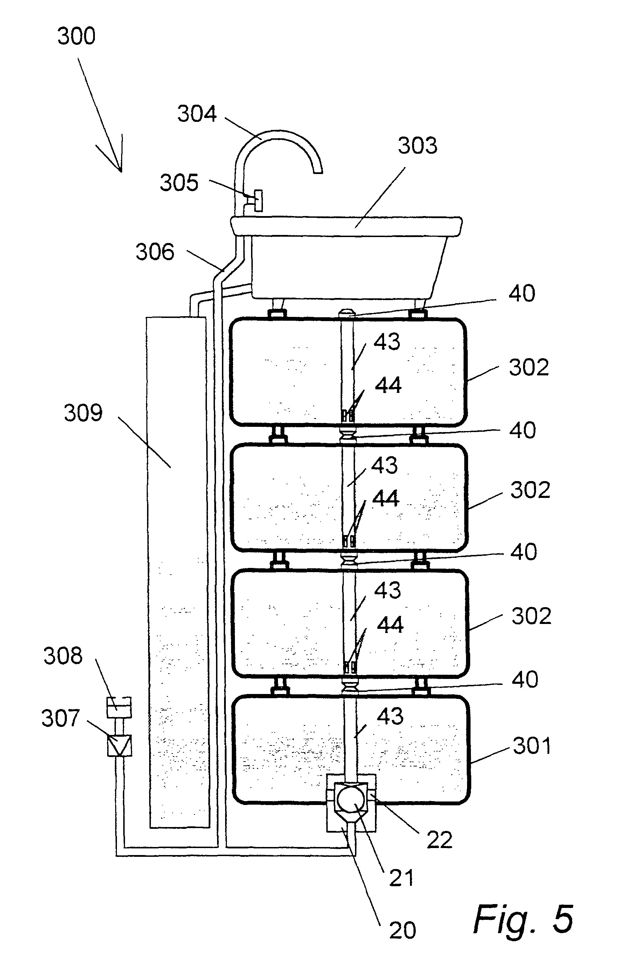

Der Druckbehälter 111 kann über einen Anschlussstutzen 114 mit Absperrventil und Einwegventil (siehe Fig. 5) befüllt werden. Ein Manometer 115 erlaubt die Kontrolle des Behälterinnendrucks.

Um den Flüssigkeitsspender 100 bequem transportieren zu können, sind ein einachsiges Fahrwerk 112 und ein Handgriff 113 vorgesehen.

Auf das Gehäuse 110 aufsetzbar ist ein gesondertes Oberteil 120, welches ein Flüssigkeitsbecken 122 und einen Auslass 123 für die Flüssigkeit enthält. Vorgesehen ist eine Steigleitung 121 mit Kupplung 125, die mit der Kupplung 119 korrespondiert. Zur Steuerung des Wasserausflusses ist dem Auslass 123 ein Ventil 124 vorgeschaltet.
Gemäß der Verwendung als Tiertränke lässt sich das Ventil 124 vom Maul des Tieres betätigen. Entsprechende Konstruktionen sind handelsüblich.

Es versteht sich, dass die das Auffangbecken 122 enthaltende Einheit 120 auch fest mit dem Gehäuse 110 verbunden sein kann.

Als Zusatzeinrichtung ist am Gehäuse 110 noch ein Schlauchhalter 133 vorgesehen, auf den ein Schlauch 130 aufgewickelt ist. Der Schlauch 130 besitzt an seinem einen Ende eine Kupplung 131, die mit der Kupplung 119 korrespondiert. Am anderen Ende befindet sich ein Spritzmundstück 132.

Anhand der Fig. 2 und 3 soll das vom Innendruck des Druckbehälters 111 gesteuerte Ventil 10 erläutert werden. Es handelt sich um ein Wellrohr 12, beispielsweise aus Edelstahl, dessen Oberseite durch einen Verschlussdeckel 11 und dessen Unterseite durch einen Verschlussdeckel 13 verschlossen ist. Der untere Verschlussdeckel 13 trägt einen konischen Ventilteller 14, der mit dem Dichtsitz 117 im Boden des Druckbehälters 111 korrespondiert.

Das Wellrohr 12 ist so dimensioniert, dass der Ventilteller 14 auf dem Ventilsitz 117 aufsitzt und somit das Steigrohr 118 verschließt, sobald der Innendruck im Druckbehälter 111 auf den werksseitig eingestellten Mindestdruck von z. B. 1,5 bar gefallen ist. Dies ist in Fig. 2 dargestellt.

Ist der Innendruck im Druckbehälter 111 höher als der Mindestdruck, so wird das Wellrohr 12 zusammengepresst. Der Ventilteller 14 hebt sich vom Ventilsitz 117 ab und die Flüssigkeit kann aus dem Druckbehälter 111 in das Steigrohr 118 abfließen.

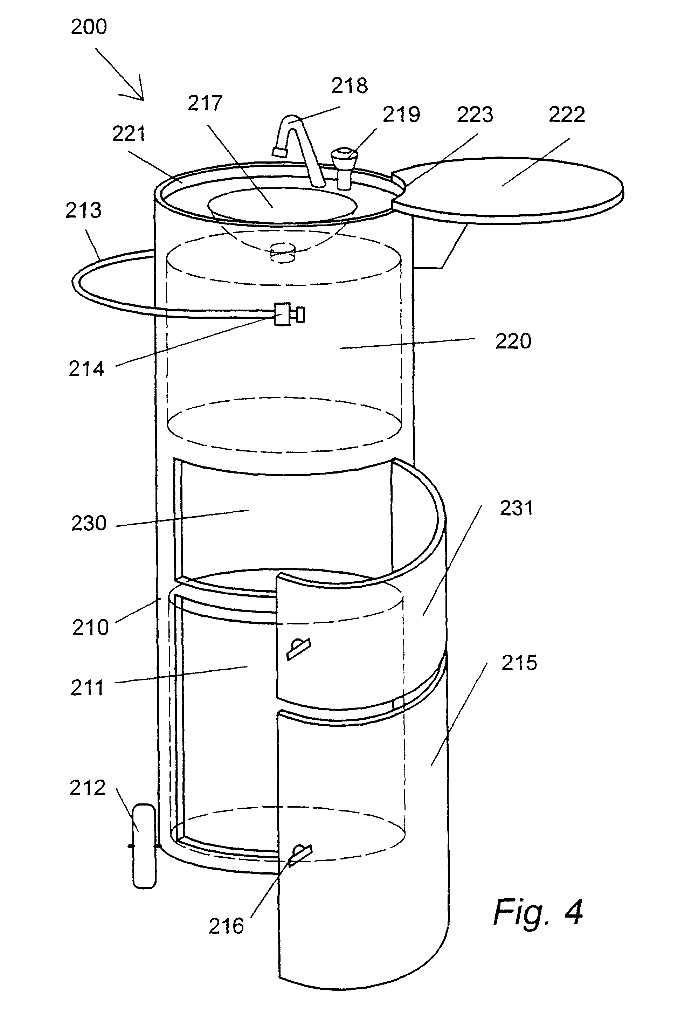

Fig. 4 zeigt einen Flüssigkeitsspender 200 in Form eines Waschplatzes. Man erkennt ein zylindrisches Gehäuse 210 mit einer Tür 215 und Verschluss 216. Durch diese Tür 215 kann der Druckbehälter 211 bei Bedarf entnommen werden. Das Gehäuse 210 ist wärmeisoliert, so dass in der kalten Jahreszeit auch erwärmte Flüssigkeit bevorratet werden kann.

In der Oberseite des Gehäuses 210 erkennt man ein Waschbecken 217, das über einen Wasserhahn 218 mit Ventil 219 gefüllt wird. Unterhalb des Waschbeckens 217 erkennt man einen Auffangbehälter 220 für die benutzte Flüssigkeit.

Die Armaturen zum Befüllen und Entleeren der Behälter 211, 220 sind der Einfachheit halber nicht dargestellt.

Zur leichteren Handhabung des Flüssigkeitsspenders 200 ist wieder ein Fahrwerk 212 vorgesehen sowie ein Handgriff 213. Dieser ist in der Zeichnung um 90° gedreht dargestellt. Der Handgriff 213 ist in Ösen 214 geführt und kann daher ausgezogen und eingeschoben werden.

Um das Waschbecken 217 herum ist der Gehäuserand 221 erhöht. Dies gibt die Möglichkeit, hier Zubehörteile anzustecken. Als Beispiel für ein Zubehörteil ist eine Arbeitsplatte 222 dargestellt. Diese ist so dimensioniert, dass sie als Deckel auf das Waschbecken 217 gestülpt werden kann. Dank der Aussparung 223 stören Wasserhahn 218 und Ventil 219 nicht.

Es versteht sich, dass auch andere Zubehörteile angesteckt werden können, beispielsweise Handtuchhalter, Seifenspender, sogar einfache mit Gas oder Spiritus betriebene Kochstellen.

Im Gehäuse 210 ist eine weitere Tür 231 vorgesehen, die den Zugang zu einem Stauraum 230 für Zubehör ermöglicht. Als Zubehör kommen unter anderem auch Anlagen zum Entkeimen oder Erwärmen der Flüssigkeit in Betracht.

Fig. 5 zeigt rein schematisch und als Längsschnitt einen als Modulsystem aufgebauten Flüssigkeitsspender 300.

Dieses System besteht aus einem Basis-Druckbehälter 301, auf den drei Zusatz-Druckbehälter 302 aufgesteckt sind. Selbstdichtende Kupplungen 40 sitzen in Boden und Decke der Druckbehälter 301, 302.

Die Grundkonstruktion des Basis-Druckbehälters 301 entspricht der der DE-U-296 20 776. Als Dichtelement, welches das Entweichen des Druckgaspolsters über der Flüssigkeit verhindert, ist ein Schwimmerventil 20 mit einer schwimmfähigen Dichtkugel 21 vorgesehen. Das Gehäuse des Ventils 20 besitzt seitliche Öffnungen 22, die die Verbindung zur Flüssigkeit herstellen.

Das Ventil 20 steht in Verbindung mit der Steigleitung 306, über die der Basis-Druckbehälter 301 auch befüllt und entleert wird.

Während das Ventil 20 im Boden des Basis-Druckbehälters 301 montiert ist, ist in der Decke desselben die selbstdichtende Kupplung 40 montiert. Ein Verbindungsrohr 43 verbindet die Kupplung 40 mit dem Dichtelement 20.

Die in Boden und Decke der Zusatz-Druckbehälter 302 montierten Teile der Kupplung 40 sind ebenfalls mit Hilfe von Verbindungsrohren 43 gas- und flüssigkeitsdicht miteinander verbunden. Das Rohr 43 besitzt im Bereich des Behälterbodens Öffnungen 44, die die Verbindung zu der Flüssigkeit herstellen.

Vor dem ersten Befüllen mit Flüssigkeit werden die Druckbehälter 301, 302 mit einem Druckgaspolster von z. B. 1,5 bar befüllt, vorzugsweise werksseitig. Anschließend wird eine Schlauchanschlußarmatur 308 über einen Schlauch (nicht dargestellt) mit dem Versorgungsnetz verbunden, in dem ein Druck von z. B. 5 bar herrscht. Dadurch öffnet sich das Rückschlagventil 307 und die Flüssigkeit strömt über die Steigleitung 306, das Schwimmerventil 20, die Öffnung 22, die Rohre 43, die Öffnungen 44 und die selbstschließenden Kupplungen 40 in alle Druckbehälter 301, 302. Sobald der Druck der Druckgaspolster über den Flüssigkeiten bis auf den Druck des Versorgungsnetzes angestiegen ist, endet das Befüllen selbsttätig. Das Rückschlagventil 307 schließt und der Schlauch kann abgenommen werden. Gemäß dem Gesetz von Boyle-Mariotte reduziert sich das Gasvolumen von anfangs 100 % auf 30 %, so dass die Druckbehälter zu 70 % mit Flüssigkeit gefüllt sind. Das Eigengewicht der Druckgaspolster ist vernachlässigbar klein.

Auf dem obersten Zusatz-Druckbehälter 302 ist ein Waschbecken 303 mit Wasserhahn 304 und Handventil 305 als Verbrauchsstelle aufgestellt. Der Wasserhahn 304 ist über die Steigleitung 306 mit dem Basis-Druckbehälter 301 verbunden. Sobald das Handventil 305 geöffnet wird, strömt die Flüssigkeit unter Druck in das Waschbecken 303. Ein Abwassertank 309 nimmt das Abwasser auf.

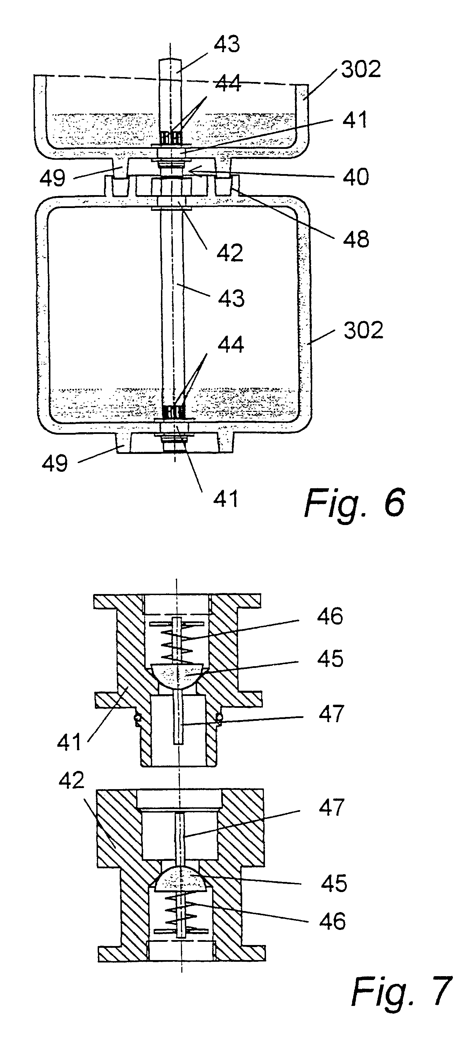

Fig. 6 zeigt in vergrößertem Maßstab einen Schnitt durch zwei Zusatz-Druckbehälter 302. An Boden und Decke der Behälter 303 sind miteinander korrespondierende Halte- und Justiervorrichtungen 48, 49 vorgesehen. Diese umgeben die Kupplung 40 konzentrisch und sorgen so dafür, dass sie beim Aufsetzen eines Behältermoduls nicht beschädigt wird.

Des weiteren erkennt man in Boden und Decke der Zusatz-Druckbehälter das männliche Teil 41 bzw. das weibliche Teil 42 der selbstschließenden Kupplung 40. Einzelheiten ergeben sich aus der vergrößerten Darstellung in Fig. 7.

Man erkennt femer das die beiden Teile 41, 42 der Kupplung 40 verbindende Rohr 43 mit den Öffnungen 44 im Bereich des Behälterbodens.

Fig. 7 zeigt in vergrößerter Darstellung und längsgeschnitten die beiden Teile 41, 42 der selbstdichtenden Kupplung 40, hier ausgeführt als Steckkupplung.

Beide Teile 41, 42 besitzen einen kegelförmigen Dichtsitz. Auf diesen wird mit Hilfe einer Feder 46 ein Dichtkörper 45 gedrückt. Die Dichtkörper 45 tragen an ihrer Vorderseite einen Öffnungsstift 47. Werden die beiden Teile 41, 42 der Steckkupplung 40 zusammengesteckt, so treffen die Öffnungsstifte 47 aufeinander und heben die Dichtkörper 45 gegen die Kraft der Federn 46 von den Ventilsitzen ab.

Werden die beiden Teile 41, 42 der Steckkupplung 40 wieder getrennt, so werden die Dichtkörper 45 von den Federn 46 wieder auf die Ventilsitze gedrückt, so dass weder Flüssigkeit noch Gas austreten können.

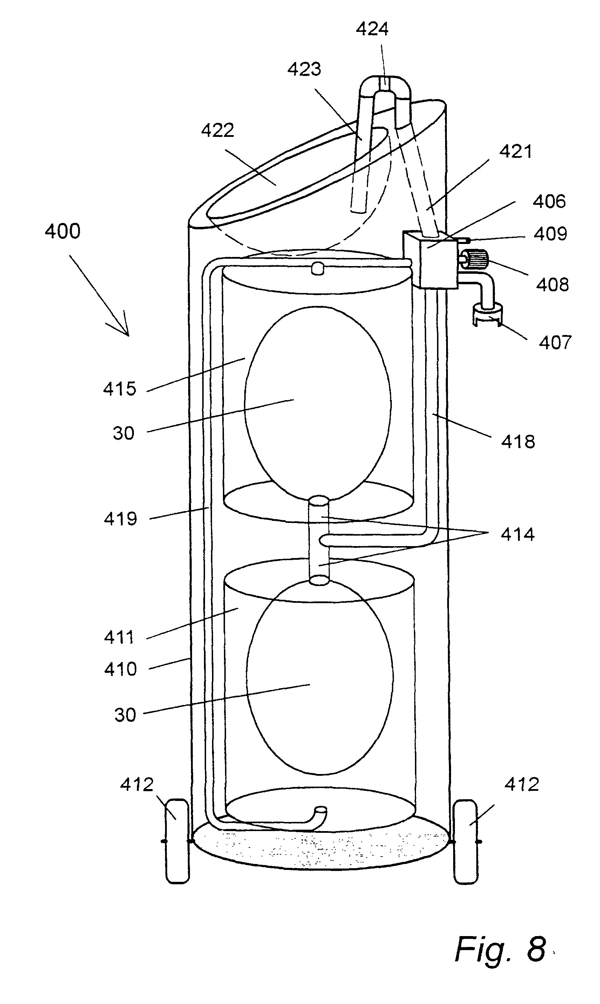

Fig. 8 zeigt einen weiteren Flüssigkeitsspender 400 in Form einer Tiertränke. Im Inneren des Gehäuses 410 sind zwei Druckbehälter 411, 415 untergebracht. In deren Inneren erkennt man je eine sackförmige Membran 30 als Dichtelement. Im Inneren der Membranen 30 befindet sich die bevorratete Flüssigkeit, außerhalb das Druckgaspolster. Das Innere der Membranen 30 steht über Anschlussstutzen 414 mit einer Steigleitung 418 in Verbindung. Die Druckgaspolster der Druckbehälter 411, 415 sind über eine Druckverbindungsleitung 419 verbunden, so dass die Innendrücke in den beiden Behältern immer identisch sind.

In das Gehäuse 410 eingebaut ist eine Zentralarmatur 406. Diese umfasst eine Schlauchanschlussarmatur 407, ein Absperrventil 408 und eine Druckgas-Anschlusskupplung 409. Auch ein Manometer kann gegebenenfalls vorgesehen werden.

Entsprechend der Verwendung als Tiertränke ist in der Oberseite des Gehäuses 410 ein Trinkbecken 422 vorgesehen, welches über einen Wasserauslass 423 mit maulbetätigtem Ventil 424 befüllt werden kann. Eine Steigleitung 421 verbindet die zentrale Anschlussarmatur 406 mit dem maulbetätigten Ventil 424.

## Patentansprüche

1. Ohne Hilfsenergie und/oder Hilfsvorrichtung arbeitender, mobiler Flüssigkeitsspender (100, 200, 300, 400) zur Versorgung von Verbrauchsstellen (123, 132, 218, 304, 423) mit Flüssigkeit unter Druck, im wesentlichen umfassend
- wenigstens einen Druckbehälter (111, 211, 301, 411, 415) mit
- einer Einfüllöffnung (114, 308, 414) für die Flüssigkeit, der wenigstens ein Absperrventil (407) zugeordnet ist,
- einer Entnahmeöffnung für die Flüssigkeit,
- einem Druckgaspolster über der Flüssigkeit,
- einer Einfüllöffnung (409) für das Druckgas
- und einem Dichtelement (10, 20, 30), welches
― die Flüssigkeit passieren lässt
― und ein Entweichen des Druckgaspolsters verhindert,
- eine Steigleitung (118, 306, 318) verbindet das Dichtelement (10, 20, 30) mit einem Auslass (123, 218, 304, 423) für die Flüssigkeit,
gekennzeichnet durch die Merkmale:
- auf dem wenigstens einen Druckbehälter (111, 211, 301, 411, 417) befindet sich ein Becken (122, 217, 303, 422) für die Flüssigkeit,
- dem Becken (122, 217, 303, 422) ist der Auslass (123, 218, 304, 423) mit Absperrventil (124, 219, 305, 424) für die Flüssigkeit zugeordnet,
- Becken (122, Auslass (123) und Absperrventil (124) sind in einem vom Gehäuse (110) abnehmbaren Teilgehäuse (120) zusammengefasst,
- die Steigleitung (118) umfasst eine Kupplung (119, 125) mit Absperrvorrichtung, vorzugsweise eine Schnellkupplung mit integriertem Wasserstopp,
- das Gehäuse (210) besitzt im Bereich des Beckens (217) einen erhöhten Rand (221)
- am Rand (221) sind Zubehörteile, z. B. eine Arbeitsplatte (222), ansteckbar.

2. Flüssigkeitsspender nach Anspruch 1, gekennzeichnet durch die Merkmale:
- Becken (122, 217, 303, 422) und Teilgehäuse (120) bilden eine Einheit,
- die Einheit ist aus Kunststoff gespritzt bzw, geblasen.

3. Flüssigkeitsspender nach Anspruch 1, gekennzeichnet durch die Merkmale:
- dem Becken (217, 303) ist ein Flüssigkeits-Sammelbehälter (220, 309) zugeordnet,
- Becken (217, 303) und Sammelbehälter (220, 309) bilden eine Einheit.

4. Flüssigkeitsspender nach Anspruch 1, gekennzeichnet durch die Merkmale:
- dem Becken (217) ist ein Flüssigkeits-Sammelbehälter (220) zugeordnet,
- der Flüssigkeits-Sammelbehälter (220) ist im Gehäuse (110) untergebracht

5. Flüssigkeitsspender nach einem der Ansprüche 1 bis 4, gekennzeichnet durch das Merkmal:
- Druckbehälter (111, 211, 301, 302) und/oder Gehäuse (110) sind wärmeisoliert.

6. Flüssigkeitsspender nach Anspruch 1, gekennzeichnet durch die Merkmale:
- der Druckbehälter (301)
― bildet den Basis-Druckbehälter
― und besitzt eine zusätzliche Kupplung (40) mit Absperrvorrichtung,
- es ist wenigstens ein Zusatz-Druckbehälter (302) vorgesehen,
- der Zusatz-Druckbehälter (302) besitzt ebenfalls eine zusätzliche Kupplung (40) mit Absperrvorrichtung, korrespondierend mit der Kupplung (40) im Basis-Druckbehälter (301),
- die Kupplungen (40) haben Verbindung nur zur Flüssigkeit.

7. Flüssigkeitsspender nach Anspruch 6, gekennzeichnet durch die Merkmale:
- in die Wände des Zusatz-Druckbehälters (302) sind das männliche und das weibliche Teil (41, 42) einer selbstdichtenden Kupplung (40) eingesetzt,
- der Basis-Druckbehälter (301) besitzt nur eines der beiden Teile (41, 42) der Kupplung (40).

8. Flüssigkeitsspender nach Anspruch 7, gekennzeichnet durch die Merkmale:
- Verbindungsrohre (43) verbinden
― im Basis-Druckbehälter (301) das Dichtelement (20) und das eine Kupplungsteil (41, 42),
― in den Zusatz-Druckbehältem (302) die beiden Kupplungsteile (41, 42),
- die Verbindungsrohre (43) haben Verbindung nur zur Flüssigkeit.

9. Flüssigkeitsspender nach Anspruch 6, 7 oder 8, gekennzeichnet durch das Merkmal:
- an den Druckbehältern (301, 302) sind miteinander korrespondierende Halte- und Justiervorrichtungen (48, 49) vorgesehen, vorzugsweise konzentrisch zur Kupplung (40).

10. Flüssigkeitsspender nach Anspruch 1, gekennzeichnet durch das Merkmal:
- das Dichtelement ist eine Membran (30).

11. Flüssigkeitsspender nach Anspruch 1, gekennzeichnet durch das Merkmal:
- das Dichtelement ist ein vom Innendruck gesteuertes Ventil (10).

12. Flüssigkeitsspender nach Anspruch 11, gekennzeichnet durch die Merkmale:
- das Ventil (10) umfasst
― ein Wellrohr (12),
― einen hinteren Verschlussdeckel (11) auf dem Wellrohr (12),
― einen vorderen Verschlussdeckel (13) auf dem Wellrohr (12)
― und einen Ventilteller (14),
- der Ventilteller (14) korrespondiert mit einem Ventilsitz (117) an der Steigleitung (118) zur Verbrauchsstelle (123, 132, 218, 304).

13. Flüssigkeitsspender nach Anspruch 1, gekennzeichnet durch das Merkmal:
- das Dichtelement ist ein vom Flüssigkeitspegel gesteuertes Ventil (20).

14. Flüssigkeitsspender nach Anspruch 13, gekennzeichnet durch die Merkmale:
- das Ventil (20) umfasst
― ein Ventilgehäuse mit Öffnungen (22) zur Flüssigkeit
― und eine schwimmende Dichtkugel (21) im Ventilgehäuse

15. Flüssigkeitsspender nach einem der Ansprüche 1 bis 14, gekennzeichnet durch die Merkmale:
- das Gehäuse (110) besitzt
― ein Fahrwerk (112, 212), vorzugsweise einachsig,
― und einen Handgriff (113, 213), vorzugsweise ausziehbar.

16. Flüssigkeitsspender nach einem der Ansprüche 1 bis 15, gekennzeichnet durch das Merkmal:
- das Gehäuse (110, 210, 410) besitzt Öffnungen, Haken oder dergleichen zur Befestigung von Zubehörteilen, z. B. einer Schlauchhalterung (133).

17. Flüssigkeitsspender nach Anspruch 1, gekennzeichnet durch die Merkmale:
- am Gehäuse (110) ist mindestens ein Schlauch (130, 132) mit Schlauchkupplung (131) angebracht,
- die Schlauchkupplung (131) korrespondiert mit der Kupplung (119) an der Steigleitung (118).

18. Flüssigkeitsspender nach einem der Ansprüche 1 bis 17, gekennzeichnet durch das Merkmal:
- den Druckbehältern (111, 211, 301, 302, 441, 415) sind Manometer (115) zugeordnet.

19. Flüssigkeitsspender nach Anspruch 1, gekennzeichnet durch das Merkmal:
- im Gehäuse (210) ist wenigstens ein Stauraum (230) vorgesehen zur Aufnahme von Zubehör.

20. Flüssigkeitsspender nach Anspruch 19, gekennzeichnet durch das Merkmal:
- im Stauraum (230) ist eine Anlage zum Entkeimen der Flüssigkeit untergebracht.

21. Flüssigkeitsspender nach Anspruch 19, gekennzeichnet durch das Merkmal:
- im Stauraum (230) ist eine Anlage zum Erwärmen der Flüssigkeit untergebracht.

22. Flüssigkeitsspender nach Anspruch 1, gekennzeichnet durch das Merkmal:
- im Gehäuse (210) ist wenigstens eine Schublade vorgesehen zur Aufnahme von Zubehör.

## Claims

1. Mobile liquid dispenser (100, 200, 300, 400), working without auxiliary energy and/or an auxiliary device, for supplying consumption points (123, 132, 218, 304, 423) with pressurised liquid, essentially comprising
- at least one pressure vessel (111, 211, 301, 411, 415) with
- a feed opening (114, 308, 414) for the liquid, with which opening at least one shut-off valve (407) is associated,
- a removal opening for the liquid,
- a compressed-gas cushion above the liquid,
- a feed opening (409) for the compressed gas
- and a sealing element (10, 20, 30), which
- lets the liquid pass
- and prevents the compressed-gas cushion escaping,
- a riser (118, 306, 318) connects the sealing element (10, 20, 30) to an outlet (123, 218, 304, 423) for the liquid,
characterised by the features:
- a basin (122, 217, 303, 422) for the liquid is located on the pressure vessel (111, 211, 301, 411, 417), of which there is at least one,
- the outlet (123, 218, 304, 423) with shut-off valve (124, 219, 305, 424) for the liquid is associated with the basin (122, 217, 303, 422),
- the basin (122), outlet (123) and shut-off valve (124) are grouped in a sub-housing (120), which can be detached from the housing (110),
- the riser (118) comprises a coupling (119, 125) with shut-off device, preferably a rapid-action coupling with integrated water stop,
- the housing (210) has a raised edge (221) in the region of the basin (217),
- accessories, e.g. a working plate (222), can be fitted to the edge (221).

2. Liquid dispenser according to Claim 1, characterised by the features:
- the basin (122, 217, 303, 422) and the sub-housing (120) form a unit,
- the unit is injection moulded or blown from a plastics material.

3. Liquid dispenser according to Claim 1, characterised by the features:
- a liquid collecting vessel (220, 309) is associated with the basin (217, 303),
- the basin (217, 303) and the collecting vessel (220, 309) form a unit.

4. Liquid dispenser according to Claim 1, characterised by the features:
- a liquid collecting vessel (220) is associated with the basin (217),
- the liquid collecting vessel (220) is housed in the housing (110).

5. Liquid dispenser according to any one of Claims 1 to 4,
characterised by the feature:
- the pressure vessel (111, 211, 301, 302) and/or the housing (110) is/are heat-insulated.

6. Liquid dispenser according to Claim 1, characterised by the features:
- the pressure vessel (301)
- forms the base pressure vessel
- and has an additional coupling (40) with shut-off device,
- at least one additional pressure vessel (302) is provided,
- the additional pressure vessel (302) also has an additional coupling (40) with shut-off device, corresponding to the coupling (40) in the base pressure vessel (301),
- the couplings (40) only have a connection to the liquid.

7. Liquid dispenser according to Claim 6, characterised by the features:
- the male and the female part (41, 42) of a self-sealing coupling (40) are inserted in the walls of the additional pressure vessel (302),
- the base pressure vessel (301) only encompasses one of the two parts (41, 42) of the coupling (40).

8. Liquid dispenser according to Claim 7, characterised by the features:
- connecting pipes (43) connect
- the sealing element (20) and one coupling part (41, 42) in the base pressure vessel (301),
- the two coupling parts (41, 42) in the additional pressure vessels (302),
- the connecting pipes (43) only have a connection to the liquid.

9. Liquid dispenser according to Claim 6, 7 or 8,
characterised by the feature:
- holding and adjusting devices (48, 49), which correspond to one another, are provided at the pressure vessels (301, 302), preferably concentrically with the coupling (40).

10. Liquid dispenser according to Claim 1, characterised by the feature:
- the sealing element is a membrane (30).

11. Liquid dispenser according to Claim 1, characterised by the feature:
- the sealing element is a valve (10) controlled by the internal pressure.

12. Liquid dispenser according to Claim 11, characterised by the feature:
- the valve (10) comprises
- a corrugated pipe (12),
- a rear closure cover (11) on the corrugated pipe (12),
- a front closure cover (13) on the corrugated pipe (12)
- and a valve disc (14),
- the valve disc (14) corresponds to a valve seat (117) at the riser (118) to the consumption point (123, 132, 218, 304).

13. Liquid dispenser according to Claim 1, characterised by the feature:
- the sealing element is a valve (20) controlled by the liquid level.

14. Liquid dispenser according to Claim 13, characterised by the features:
- the valve (20) comprises
- a valve chamber with openings (22) to the liquid
- and a floating sealing ball (21) in the valve chamber.

15. Liquid dispenser according to any one of Claims 1 to 14,
characterised by the features:
- the housing (110) has
- travelling gear (112, 212), preferably of the two-wheel type,
- and a handle (113, 213), preferably a pull-out handle.

16. Liquid dispenser according to any one of Claims 1 to 15,
characterised by the feature:
- the housing (110, 210, 410) has openings, hooks or similar for attaching accessories, e.g. a hose holder (133).

17. Liquid dispenser according to Claim 1, characterised by the features:
- at least one hose (130, 132) with hose coupling (131) is mounted on the housing (110),
- the hose coupling (131) corresponds to the coupling (119) at the riser (118).

18. Liquid dispenser according to any one of Claims 1 to 17,
characterised by the feature:
- manometers (115) are associated with the pressure vessels (111, 211, 301, 302, 441, 415).

19. Liquid dispenser according to Claim 1, characterised by the feature:
- at least one storage space (230) is provided in the housing (210) to accommodate accessories.

20. Liquid dispenser according to Claim 19, characterised by the feature:
- a system for disinfecting the liquid is housed in the storage space (230).

21. Liquid dispenser according to Claim 19, characterised by the feature:
- a system for heating the liquid is housed in the storage space (230).

22. Liquid dispenser according to Claim 1, characterised by the feature:
- at least one drawer is provided in the housing (210) to accommodate accessories.

## Revendications

1. Distributeur de liquide (100, 200, 300, 400) mobile et travaillant sans énergie auxiliaire et/ou dispositif auxiliaire pour l'alimentation de points de consommation (123, 132, 218, 304, 423) avec du liquide sous pression, comprenant pour l'essentiel
- au moins un récipient sous pression (111, 211, 301, 411, 415) avec
- une ouverture de remplissage (114, 308, 414) pour le liquide, associé à au moins une soupape d'arrêt (407),
- une ouverture de prélèvement pour le liquide,
- un coussin de gaz sous pression au-dessus du liquide
- une ouverture de remplissage (409) pour le gaz sous pression
- et un élément d'étanchéité (10, 20, 30), qui
- laisse passer le liquide
- et empêche un échappement du coussin de gaz sous pression,
- une conduite montante (118, 306, 318) relie l'élément d'étanchéité (10, 20, 30) à une évacuation (123, 218, 304, 423) pour le liquide,
**caractérisé en ce que** :
- sur le/un récipient sous pression (111, 211, 301, 411, 417) se trouve un réservoir (122, 217, 303, 422) pour le liquide,
- au réservoir (122, 217, 303, 422) est associée l'évacuation (123, 218, 304, 423) avec une soupape d'arrêt (124, 219, 305, 424) pour le liquide,
- le réservoir (122), l'évacuation (123) et la soupape d'arrêt (124) sont regroupés dans une partie de boîtier partiel (120) qui peut être retirée du boîtier (110),
- la conduite montante (118) comprend un accouplement (119, 125) avec dispositif d'arrêt, de préférence un raccord rapide avec arrêt d'eau intégré,
- le boîtier (210) présente dans la zone du réservoir (217) un bord (221) élevé
- des pièces accessoires, par exemple un plateau de travail (222) pouvant être fixées au bord (221).

2. Distributeur de liquide selon la -revendication 1,
**caractérisé en ce que** :
- le réservoir (122, 217, 303, 422) et la partie de boîtier (120) forment une unité,
- l'unité étant injectée ou soufflée à partir de matière synthétique du type plastique.

3. Distributeur de liquide selon la revendication 1,
**caractérisé en ce que** :
- un récipient collecteur de liquide (220, 309) est attribué au réservoir (217, 303)
- le réservoir (217, 303) et le récipient collecteur (220, 309) formant une unité.

4. Distributeur de liquide selon la revendication 1,
**caractérisé en ce que** :
- un récipient collecteur de liquide (220) est attribué au réservoir (217),
- le récipient collecteur de liquide (220) est logé dans le boîtier (110).

5. Distributeur de liquide selon l'une quelconque des revendications 1 à 4, **caractérisé en ce que** le récipient sous pression (111, 211, 301, 302) et/ou le boîtier (110) sont calorifugés.

6. Distributeur de liquide selon la revendication 1,
**caractérisé en ce que** :
- le récipient sous pression (301)
- constitue le récipient sous pression de base
- et présente un accouplement (40) supplémentaire avec dispositif d'arrêt,
- il est prévu au moins un récipient sous pression supplémentaire (302),
- le récipient sous pression supplémentaire (302) présente également un accouplement (40) supplémentaire avec dispositif d'arrêt, correspondant à l'accouplement (40) dans le récipient sous pression de base (301),
- les accouplements (40) ont uniquement une liaison avec le liquide.

7. Distributeur de liquide selon la revendication 6,
**caractérisé en ce que** :
- la partie mâle et la partie femelle (41, 42) d'un accouplement (40) auto-étanchéifiant sont insérées dans les parois du récipient sous pression supplémentaire (302),
- le récipient sous pression de base (301) présentant seulement une des deux parties (41, 42) de l'accouplement (40).

8. Distributeur de liquide selon la revendication 7,
**caractérisé en ce que** :
- les tuyaux de liaison (43) relient
- l'élément d'étanchéité (20) et une partie d'accouplement (41, 42), dans le récipient sous pression de base (301)
- et les deux parties d'accouplement (41, 42), dans les récipients sous pression supplémentaires (302)
- les tuyaux de liaison (43) étant en contact seulement avec le liquide.

9. Distributeur de liquide selon la revendication 6, 7 ou 8, **caractérisé en ce que** sur les récipients sous pression (301, 302), il est prévu des systèmes de retenue et de réglage (48, 49) correspondant entre eux, de préférence concentriques par rapport à l'accouplement (40).

10. Distributeur de liquide selon la revendication 1,
**caractérisé en ce que** l'élément d'étanchéité est une membrane (30).

11. Distributeur de liquide selon la revendication 1,
**caractérisé en ce que** l'élément d'étanchéité est une soupape (10) commandée par la pression interne.

12. Distributeur de liquide selon la revendication 11,
**caractérisé en ce que** la soupape (10) comprend :
- un tube ondulé (12),
- un couvercle de fermeture (11) arrière sur le tube ondulé (12),
- un couvercle de fermeture (13) avant sur le tube ondulé (12)
- et une tête de soupape (14),
- la tête de soupape (14) correspond à un siège de soupape (117) sur la conduite montante (118) pour le point de consommation (123, 132, 218, 304).

13. Distributeur de liquide selon la revendication 1,
**caractérisé en ce que** l'élément d'étanchéité est une soupape (20) commandée par le niveau du liquide.

14. Distributeur de liquide selon la revendication 13,
**caractérisé en ce que** la soupape (20) comprend :
- une cage de soupape avec des ouvertures (22) pour le liquide
- et une bille d'étanchéité (21) flottante dans la cage de soupape.

15. Distributeur de liquide selon l'une quelconque des revendications 1 à 14, **caractérisé en ce que** le boîtier (110) présente :
- un train de roulement (112, 212) de préférence à un seul essieu,
- et une poignée (113, 213), de préférence extensible.

16. Distributeur de liquide selon l'une quelconque des revendications 1 à 15, **caractérisé en ce que** le boîtier (110, 210, 410), présente des ouvertures, des crochets ou similaires, pour la fixation de pièces accessoires, par exemple une fixation de flexible (133)

17. Distributeur de liquide selon la revendication 1,
**caractérisé en ce que** :
- sur le boîtier (110) est disposé au moins un
- flexible (130, 132) avec un raccord symétrique pour flexible (131),
- le raccord symétrique pour flexible (131) correspond à l'accouplement (119) sur la conduite montante (118).

18. Distributeur de liquide selon l'une quelconque des revendications 1 à 17, **caractérisé en ce que** des manomètres (115) sont attribués aux récipients sous pression (111, 211, 301, 302, 441, 415).

19. Distributeur de liquide selon la revendication 1,
**caractérisé en ce que** dans le boîtier (210), il est prévu au moins un espace de retenue (230) pour le logement des accessoires.

20. Distributeur de liquide selon la revendication 19,
**caractérisé en ce que** dans l'espace de retenue (230) est logé un appareil pour la stérilisation du liquide.

21. Distributeur de liquide selon la revendication 19,
**caractérisé en ce que** dans l'espace de retenue (230) est logé un appareil pour le réchauffement du liquide.

22. Distributeur de liquide selon la revendication 1,
**caractérisé en ce que** dans le boîtier (210), il est prévu au moins un tiroir pour le logement des accessoires.
